# EUROPÄISCHE PATENTANMELDUNG

(11) **EP 4 001 961 A1**
(43) Veröffentlichungstag der Anmeldung: **25.05.2022**
(21) Anmeldenummer: 21206727.6
(22) Anmeldetag: 05.11.2021
(51) Int. Cl.: G01S 13/88, G01S 7/48, G01S 17/42, G01S 17/894, B66F 9/06, B66F 9/075, G05D 1/02, G01S 7/487, G01S 7/493

(54) **VERFAHREN ZUM ERKENNEN VON OBJEKTEN IN EINEM LAGER MITTELS EINES FLURFÖRDERZEUGS SOWIE EIN FLURFÖRDERZEUG**

(30) Priorität: 17.11.2020 DE 102020130280
(71) Anmelder: Jungheinrich Aktiengesellschaft, 22047 Hamburg (DE)
(72) Erfinder: Bistry, Hannes, 25421 Pinneberg (DE); Wetegrove, Ralf, 22850 Norderstedt (DE)
(74) Vertreter: Hauck Patentanwaltspartnerschaft mbB

(57) **Zusammenfassung**

Das erfindungsgemäße Verfahren zum Erkennen von Objekten in einem Lager mittels eines Flurförderzeugs, umfasst die Schritte: Aussenden eines Erkennungssignals mittels einer Sendeeinrichtung des Flurförderzeugs, Erfassen des von Objekten in der Umgebung reflektierten Erkennungssignals als Signalecho mittels einer Empfangseinrichtung des Flurförderzeugs, Zuordnen eines Raumwinkels und eines Empfangszeitpunkts zu jedem der Signalechos, Prüfen, ob mehreren der Signalechos derselbe Raumwinkel zugeordnet wurde, wenn einem Raumwinkel mehrere Signalechos zugeordnet wurden, Auswerten des gemäß Empfangszeitpunkt für diesen Raumwinkel zuletzt in der Empfangseinrichtung eingetroffenen Signalechos für die Erkennung des Objekts, Erkennen des Objekts auf Grundlage der Signalechos.

## Beschreibung

Die Erfindung betrifft ein Verfahren zum Erkennen von Objekten in einem Lager mittels eines Flurförderzeugs sowie ein Flurförderzeug zur Ausführung des Verfahrens.

Flurförderzeuge umfassen üblicherweise eine Mehrzahl von Sensoren zur Erkennung ihrer Umgebung, wie beispielsweise Laserscanner. Mittels dieser Sensoren können Objekte in der Umgebung des Flurförderzeugs erkannt werden und es kann das Flurförderzeug auf Grundlage der erkannten Objekte gesteuert werden, beispielsweise kann das Flurförderzeug bei einem als Hindernis erkannten Objekt um das Hindernis herumgesteuert werden. Auch kann beispielsweise ein aufzunehmender Ladungsträger, wie eine Palette, auf diese Weise durch das Flurförderzeug erkannt und anschließend aufgenommen werden.

Ein diesbezügliches Erkennungsverfahren ist bekannt aus EP 3 316 181 A1. Bei diesem Verfahren wird auf Grundlage von durch eine 3D-Kamera aufgenommenen Daten eine Darstellung eines in der Nähe des Flurförderzeugs befindlichen Objekts erzeugt und mit einem Template, also einem vordefinierten Muster, verglichen. Das Template kann in einer Auswerteeinrichtung des Flurförderzeugs hinterlegt sein. Bei diesem sogenannten Template-Matching kann geprüft werden, ob das über die 3D-Kamera aufgenommene Bild, beispielsweise einer Palette, hinreichend mit dem hinterlegten Bild der Palette als Template übereinstimmt. Bei hinreichender Übereinstimmung wird das Objekt als Palette erkannt. Das Flurförderzeug kann dann, insbesondere automatisch, durch Einfahren der Lastgabel des Flurförderzeugs in die Palettentaschen und anschließenden Hub die Palette aufnehmen.

Es kann bei bekannten Verfahren dazu kommen, dass die Objekterkennung fehlschlägt. Bei dem erläuterten Template-Matching ist dies beispielsweise dann der Fall, wenn die erfasste Darstellung der Palette nicht ausreichend mit dem Template übereinstimmt. Wie die Erfinder erkannt haben, kommt dies insbesondere dann vor, wenn eine auf der Palette angeordnete Last von einer teiltransparenten Folierung umwickelt ist. Folien werden in der Logistik häufig zum Fixieren von Lasten verwendet. Dabei kommt es regelmäßig vor, dass die Folierung auch die Palettentaschen zumindest teilweise verdeckt. Das aufgenommene Bild der Palette weicht dann gegebenenfalls zu stark von dem Template ab.

Im Rahmen der Objekterkennung kann beispielsweise anstatt einer Palette auch ein Freiraum innerhalb eines Lagerregals als Objekt erkannt werden. Auch eine solche Erkennung kann fehlschlagen, wenn beispielsweise Folien von einer darüber befindlichen Regalebene in den darunterliegenden Freiraum hineinhängen. Auch ein teiltransparenter Segmentvorhang, mit dem unterschiedliche Lagerbereiche voneinander getrennt sein können, kann als Hindernis die erfolgreiche Erkennung von hinter dem Segmentvorhang befindlichen Objekten verhindern. Insbesondere kann dieser ein scheinbares Hindernis darstellen, auch wenn die Durchfahrt im Rahmen des bestimmungsgemäßen Gebrauchs möglich wäre.

Bekannt ist auch die Hinderniserkennung im Straßenverkehr mittels LIDAR-Systemen, beispielsweise aus WO 2019/164959 A1, WO 2019/226487 A1 oder WO 2019/222684 A1. Diese LIDAR-Systeme senden Laserpulse aus und werten die Echos im Zeitverlauf aus bzw. Reduzieren durch Mehrfachmessungen das Signalzu-Rauschen-Verhältnis. So sollen auch durch Nebel oder Rauch verdeckte Hindernisse erkannt werden.

Ausgehend von diesem Stand der Technik liegt der Erfindung die Aufgabe zugrunde, ein Verfahren bzw. ein Flurförderzeug zur Verfügung zu stellen, mit denen Objekte in einem Lager zuverlässiger erkannt werden können. Insbesondere sollen die Objekte trotz einer Verdeckung durch zumindest teiltransparente Hindernisse erkannt werden.

Die Erfindung löst die Aufgabe durch ein Verfahren gemäß Anspruch 1 sowie durch ein Flurförderzeug gemäß Anspruch 15. Vorteilhafte Ausgestaltungen sind Gegenstand der abhängigen Ansprüche, der Beschreibung sowie der Figuren.

Das erfindungsgemäße Verfahren zum Erkennen von Objekten in einem Lager mittels eines Flurförderzeugs, umfasst die Schritte:
- Aussenden eines Erkennungssignals mittels einer Sendeeinrichtung des Flurförderzeugs,
- Erfassen des von Objekten in der Umgebung reflektierten Erkennungssignals als Signalecho mittels einer Empfangseinrichtung des Flurförderzeugs,
- Zuordnen eines Raumwinkels und eines Empfangszeitpunkts zu jedem der Signalechos,
- Prüfen, ob mehreren der Signalechos derselbe Raumwinkel zugeordnet wurde,
- wenn einem Raumwinkel mehrere Signalechos zugeordnet wurden, Auswerten des gemäß Empfangszeitpunkt für diesen Raumwinkel zuletzt in der Empfangseinrichtung eingetroffenen Signalechos für die Erkennung des Objekts,
- Erkennen des Objekts auf Grundlage der Signalechos.

Das erfindungsgemäße Flurförderzeug ist zur Ausführung des Verfahrens ausgebildet. Das erfindungsgemäße Verfahren kann also mit dem erfindungsgemäßen Flurförderzeug ausgeführt werden. Zu dem Verfahren gemachte Erläuterungen gelten entsprechend für das Flurförderzeug, insbesondere für dessen Auswerteeinrichtung, und andersherum.

Das erfindungsgemäße Flurförderzeug umfasst eine Sendeeinrichtung zum Aussenden eines Erkennungssignals, eine Empfangseinrichtung zum Erfassen des von Objekten in der Umgebung reflektierten Erkennungssignals als Signalecho, sowie eine Auswerteeinrichtung, wobei die Auswerteeinrichtung dazu ausgebildet ist, jedem der Signalechos einen Raumwinkel und einen Empfangszeitpunkt zuzuordnen, zu prüfen, ob mehreren der Signalechos derselbe Raumwinkel zugeordnet wurde, wenn einem Raumwinkel mehrere Signalechos zugeordnet wurden, das gemäß Empfangszeitpunkt für diesen Raumwinkel zuletzt in der Empfangseinrichtung eingetroffene Signalecho auszuwerten, also der Erkennung des Objekts zugrunde zu legen, das Objekt auf Grundlage der Signalechos zu erkennen, das Flurförderzeug auf Grundlage des erkannten Objekts zu steuern.

Erfindungsgemäß erfolgt eine Objekterkennung durch Aussenden von Erkennungssignalen und Auswerten von Signalechos. Das Erkennungssignal kann beispielsweise ein optisches Signal sein, insbesondere ein Lasersignal. Sendeeinrichtung und Empfangseinrichtung können Teil einer gemeinsamen Sende- und Empfangseinrichtung, insbesondere einer Sensoreinheit, sein. Beispielsweise kann als Sende- und Empfangseinrichtung ein LIDAR ("*light detection and ranging*") vorgesehen sein, welches zweidimensionale Umgebungsdaten oder auch Tiefeninformationen umfassende, dreidimensionale Umgebungsdaten ausgibt. Auch kann eine *"time of flight"-*Kamera vorgesehen sein. Das Erkennungssignal kann jedoch auch ein akustisches Signal sein, insbesondere ein Ultraschallsignal. Es kann folglich mittels einer Ultraschall-Sensorik die Umgebung erfasst werden.

Erfindungsgemäß wird jedem der durch die Empfangseinrichtung empfangenen Signalechos ein Raumwinkel sowie ein Empfangszeitpunkt zugeordnet. Es kann so eine Darstellung der Umgebung des Flurförderzeugs, insbesondere eines in der Umgebung des Flurförderzeugs befindlichen Objekts erzeugt werden. Es kann sich beispielsweise um eine zweidimensionale Darstellung handeln. Auch kann unter Berücksichtigung von Entfernungsinformationen eine dreidimensionale Darstellung erzeugt werden. Entfernungsinformationen können insbesondere unter Berücksichtigung des Sendezeitpunkts des Erkennungssignals sowie der Laufzeit der Signale abgeleitet werden.

Die Erfinder haben erkannt, dass teiltransparente Hindernisse in der Umgebung des Flurförderzeugs dazu führen können, dass unter ein und demselben Raumwinkel mehrere Signalechos auftauchen. So kann bei Auftreffen des ausgesendeten Erkennungssignals auf das teiltransparente Hindernis ein Teil des Signals reflektiert werden und damit als erstes Signalecho in der Empfangseinrichtung eintreffen, während ein durch das teiltransparente Hindernis transmittierter Teil des Erkennungssignals an einem dahinterliegenden Objekt, beispielsweise einer Palette, reflektiert wird und in der Empfangseinrichtung als aus demselben Raumwinkel kommendes, später eintreffendes zweites Signalecho empfangen wird. Bei dem eingangs erläuterten, bekannten Verfahren zum Erkennen von Objekten kann dies dazu führen, dass das teiltransparente Objekt, nicht aber das dahinter befindliche Objekt erkannt wird. Soll beispielsweise, wie eingangs erläutert, eine Palette als Objekt erkannt werden, kann die eventuell vor den Palettentaschen hängende Folie zur Fixierung der auf der Palette angeordneten Ladung die Erkennung der vom Flurförderzeug aus gesehen dahinterliegenden Palette verhindern.

Die erfindungsgemäße Lösung sieht vor, dass für den Fall, dass mehreren der Signalechos derselbe Raumwinkel zugeordnet wurde, das für den jeweiligen Raumwinkel zuletzt in der Empfangseinrichtung eingetroffene Signalecho für die Erkennung des Objekts auszuwerten. Die Auswertung des für den jeweiligen Raumwinkel zuletzt eingetroffenen Signalechos für die Erkennung des Objekts kann bedeuten, dass das letzte Signalecho dem Objekt zugeordnet wird. Insbesondere kann ausschließlich das letzte Signalecho dem Objekt zugeordnet werden. Zuvor eingetroffene Signalechos für denselben Raumwinkel können bei der Auswertung beispielsweise ignoriert werden. Auch können zuvor eingetroffene Signalechos einer Erkennung des teiltransparenten Objekts zugrunde gelegt werden, wie später noch erläutert wird. Auch kann die Auswertung des für den jeweiligen Raumwinkel zuletzt eingetroffenen Signalechos für die Erkennung des Objekts bedeuten, dass für diesen Raumwinkel ein zuvor in der Empfangseinrichtung eingegangenes Signalecho ersetzt wird oder dass keines der in der Empfangseinrichtung unter demselben Raumwinkel eingegangenen Signalechos dem Objekt zugeordnet wird. So kann beispielsweise im Rahmen der Auswertung ein auf einem vorherigen Signalecho basierender Bildpunkt auf Grundlage eines weiteren Signalechos unter demselben Raumwinkel gelöscht werden, wie später noch erläutert wird. Durch Auswerten der zuletzt eingetroffenen Signalechos für die Erkennung des Objekts kann somit beispielsweise eine Palette auch dann sicher erkannt werden, wenn deren Palettentaschen teilweise oder vollständig von einer transparenten Folie überdeckt sind. Es wird durch die transparente Folie "hindurchgeschaut". Auf Grundlage des so erkannten Objekts kann das Flurförderzeug anschließend gesteuert werden.

So kann beispielsweise bei einer erkannten Palette das Flurförderzeug, insbesondere vollautomatisch, mit der Lastgabel in die Palettentaschen einfahren und dabei die transparente Folie mit den Gabelzinken durchstechen. Auch kann beispielsweise bei der Erkennung eines Freiraums in einem Regal in den Freiraum hineinragende transparente Folie ignoriert werden. Auch kann ein teiltransparenter Segmentvorhang ignoriert und damit durch das Flurförderzeug, insbesondere vollautomatisch, durchfahren werden. Das Flurförderzeug kann durch den Segmentvorhang hindurchblicken und dahinterliegende Objekte, beispielsweise den durch das Flurförderzeug abzufahrenden Untergrund oder ein eventuelles Hindernis, wie ein anderes Flurförderzeug, zuverlässig erkennen. Die erfindungsgemäße Lösung ist dank der Zuordnung des grundsätzlich zuletzt eingetroffenen Signalechos zu dem Objekt besonders einfach und effizient, insbesondere gegenüber Verfahren, die eine Zuordnung über den Vergleich mit bekannten Pulsformen der Signalechos durchführen. So ist für die erfindungsgemäße Lösung kein Wissen über bekannte Pulsformen notwendig. Tatsächlich kann die genaue Pulsform des Signalechos irrelevant sein, da es vielmehr auf den Empfangszeitpunkt ankommt.

Die Empfangseinrichtung kann insbesondere dauerhaft messen und somit mehrere aufeinanderfolgende Signalechos erfassen. Die Empfangseinrichtung kann nach Aussenden des Erkennungssignals durch die Sendeeinrichtung für einen vorbestimmten Zeitraum aktiviert werden. So kann nach einer Ausgestaltung vorgesehen sein, dass für die Erkennung des Objekts nur Signalechos verwendet oder ausgewertet werden, die innerhalb eines vorgegebenen Zeitraums nach Aussenden des Erkennungssignals bei der Empfangseinrichtung eintreffen. Nach einer weiteren diesbezüglichen Ausgestaltung kann der vorgegebene Zeitraum auf einer maximal zu erwartenden Messdistanz basieren. Dies erhöht die Wahrscheinlichkeit, dass es sich bei den an der Empfangseinrichtung eintreffenden Signalechos auch tatsächlich um Signalechos der ausgesendeten Erkennungssignale handelt. Dies ist insbesondere relevant, wenn der Objekterkennung gemäß der Erfindung die zuletzt an der Empfangseinrichtung eingetroffenen Signalechos zugrunde gelegt werden. Die Begrenzung auf einen von einer maximal zu erwartenden Messdistanz abhängigen Zeitraum kann verhindern, dass später eintreffende Messsignale (bedingt beispielsweise durch Mehrfachreflexionen) der Objekterkennung zugrunde gelegt werden, was zu einer fehlerhaften Objekterkennung führen könnte. Insbesondere könnte das eigentlich zu erkennende Objekt übersehen werden.

Nach einer Ausgestaltung wird das Objekt erkannt durch Erzeugen einer Darstellung des Objekts auf Grundlage der Signalechos und Vergleich der Darstellung mit einem Template, wobei bei hinreichender Übereinstimmung zwischen der Darstellung und dem Template das Objekt als erkannt gilt. Es kann folglich, wie eingangs erwähnt, ein Template-Matching durchgeführt werden. So kann aus den Signalechos beispielsweise eine Darstellung einer Palettenfront erzeugt werden. Dieses Regalfrontbild kann dann mittels der Auswerteeinrichtung des Flurförderzeugs mit einem hinterlegten Template, also einem Musterbild, einer Palettenfront verglichen werden. Bei hinreichender Übereinstimmung zwischen Darstellung und Template erkennt das Flurförderzeug die Palette und kann diese aufnehmen. Die Darstellung kann dabei erzeugt werden, indem dem Objekt die jeweils letzten Signalechos zugeordnet, vorherige Signalechos unter demselben Raumwinkel jedoch ignoriert werden, wie zuvor bereits angesprochen. Das Objekt kann also ausschließlich auf Grundlage der zuletzt eingetroffenen Signalechos erkannt werden. Auch können der Erkennung des Objekts zusätzlich zuvor eingetroffene Signalechos zugrunde gelegt werden. So können beispielsweise basierend auf ersten Signalechos zunächst Bildpunkte für die Darstellung, insbesondere eines gesamten Regalfrontbilds, erzeugt werden. Anschließend kann für die Raumwinkel, unter denen ein weiteres, letztes Signalecho eintrifft, der jeweilige Bildpunkt gelöscht bzw. ersetzt werden.

Nach einer diesbezüglichen Ausgestaltung wird die Darstellung des Objekts erzeugt durch Erstellen eines zweidimensionalen Datensatzes durch Projizieren von Bildpunkten auf eine Projektionsebene. Die von der Empfangseinrichtung erfassten Signalechos können dabei als Bilddaten verstanden werden, die eine Vielzahl von Bildpunkten umfassen. Es wird hier auch von Punktwolken gesprochen. Diese Bildpunkte werden auf die Projektionsebene projiziert. Die Projektionsebene kann bevorzugt derart gewählt werden, dass sie einer vermuteten Anordnung des zu erkennenden Objekts entspricht. Die über die Projektionsebene verteilten Bildpunkte können als zweidimensionale Darstellung des Objekts verstanden werden. Auch ist eine dreidimensionale Objekterkennung möglich. Dabei kann nach einer weiteren Ausgestaltung vorgesehen sein, dass ein weiterer Datensatz erstellt wird, der ein Tiefenprofil entlang einer Linie an der Position der Projektionsebene umfasst, und dass der weitere Datensatz mit einem dem Objekt zugeordneten, vordefinierten Tiefenprofilmuster verglichen wird, wobei das Objekt endgültig erkannt wird, wenn bei diesem Vergleich eine hinreichende Übereinstimmung festgestellt wird. Nach dieser Ausgestaltung erfolgt also ein weiteres Template-Matching. Die Zuverlässigkeit der Erkennung kann somit erhöht werden. Bezüglich weiterer Details zu einem solchen Template-Matching wird verwiesen auf EP 3 316 181 A1.

Sollte sich das zuletzt eintreffende Signalecho, also das durch ein hinter einem vermeintlichen transparenten Objekt befindliche Objekt erzeugte Signalecho, nur unwesentlich von einem Signalrauschen unterscheiden, kann ein Erwartungswert errechnet werden und bei der Auswahl des jeweiligen Signalechos herangezogen werden. Der Erwartungswert kann beispielsweise auf der Geometrie eines Ladungsträgers basieren. Wird diese Geometrie - wenn auch nur schwach - von mehreren benachbarten Tiefenwerten gestützt, so das entsprechende Objekt als erkannt gelten. Auch kann der Erwartungswert dadurch gegeben sein, dass der Hallenboden abgebildet wird.

Nach einer Ausgestaltung wird, wenn mehreren der Signalechos derselbe Raumwinkel zugeordnet wurde, eines der zuvor in der Empfangseinrichtung eingetroffenen Signalechos einem zweiten Objekt zugeordnet und es wird dieses Objekt als teiltransparent erkannt. Wie erläutert, werden bei der Erkennung des ersten Objekts die zuletzt in der Empfangseinrichtung eingetroffenen Signalechos ausgewertet, sodass durch teiltransparente Hindernisse bedingte, zuvor eintreffende Signalechos ignoriert werden. Nach dieser Ausgestaltung wird jedoch auch das teiltransparente Hindernis als solches erkannt, nämlich durch Auswertung der zuvor eintreffenden Signalechos. Insbesondere kann das zuerst in der Empfangseinrichtung eingetroffene Signalecho dem zweiten Objekt zugeordnet werden und dieses Objekt damit als teiltransparent erkannt werden. Das Erkennen des zweiten Objekts als teiltransparentes Objekt kann dabei insbesondere beinhalten, dass grundsätzlich, im Falle mehrerer Signalechos, die zuerst Eintreffenden dem teiltransparenten Objekt zugeordnet werden. Insbesondere kann auch eine Darstellung dieses zweiten, teiltransparenten Objekts erstellt werden. So kann die Auswerteeinrichtung zusätzlich zu der erwähnten Punktwolke für das erste Objekt eine zweite Punktwolke für das zweite, transparente Objekt erstellen. Somit kann das transparente Hindernis konkret identifiziert und, wenn gewünscht, zielgerichtet beseitigt werden. Grundsätzlich kann das teiltransparente Objekt somit genauer klassifiziert werden, beispielsweise kann festgestellt werden, ob es sich um eine Folierung von Ware oder um einen Segmentvorhang handelt. Es kann beispielsweise geprüft werden, wenn es sich bei dem teiltransparenten Objekt um eine Folierung von Ware handelt, ob die Fixierung der Ware nachgegeben hat. Auch können grundsätzlich weitere Darstellungen erzeugt werden, insbesondere als Punktwolken. So könnte eine erste Punktwolke auf dem stärksten Signalecho basieren und eine zweite Punktwolke auf dem zweitstärksten Echo. Auch könnte eine erste Punktwolke auf dem vom Flurförderzeug aus gesehen vordersten Signalecho basieren, während eine zweite Punktwolke auf dem dahinterliegenden Signalecho basiert. Auch können in diesem Sinne dritte, vierte oder noch weitere Punktwolken vorgesehen sein.

Wird das Objekt als Segmentvorhang erkannt, kann nach einer Ausgestaltung vorgesehen sein, dass eine Geschwindigkeit des Flurförderzeugs angepasst wird. In diesem Sinne kann auf Grundlage des erkannten, zweiten Objekts eine Steuerung des Flurförderzeugs erfolgen. So kann die Geschwindigkeit des Flurförderzeugs reduziert werden, damit das Flurförderzeug den Segmentvorhang vorsichtig durchfährt. So kann eine Beschädigung des Segmentvorhangs wie auch der durch das Flurförderzeug transportierten Last vermieden werden. Auch ist eine solche Geschwindigkeitsreduzierung sinnvoll, da während der Durchfahrt durch den Segmentvorhang die Objekterkennung des Flurförderzeugs möglicherweise durch den Vorhang beeinträchtigt ist. Sollte das teiltransparente Objekt beispielsweise als Folierung einer auf einer Palette gelagerten Ware identifiziert werden, kann das Flurförderzeug diese Folierung beim Einfahren der Lastgabel in die Palettentaschen durchstoßen, wie bereits erwähnt. Auch hier kann ein Anpassen der Geschwindigkeit des Flurförderzeugs, insbesondere eine Reduktion der Geschwindigkeit, vorgesehen sein. Dies ist beispielsweise sinnvoll, wenn es sich um eine relativ leichte Last handelt, die durch ein Durchstechen der Folie vor den Palettentaschen mittels der Lastgabel ansonsten verschoben werden könnte. Dass es sich um eine leichte Last handelt, kann dem Flurförderzeug beispielsweise über ein Lagerverwaltungssystem mitgeteilt werden.

Nach einer Ausgestaltung wird bei der Erkennung des Objekts die Eigenbewegung des Flurförderzeugs berücksichtigt. Beispielsweise kann eine Fahrtrichtung, eine Fahrgeschwindigkeit, eine Beschleunigung und/oder eine Verzögerung des Flurförderzeugs als Eigenbewegung für die Erkennung des Objekts berücksichtigt werden. Insbesondere kann mehrfach eine Objekterkennung erfolgen, beispielsweise an unterschiedlichen Positionen, die das Flurförderzeug im Rahmen seiner Eigenbewegung einnimmt. So wird nach einer Ausgestaltung eine erste Darstellung des Objekts auf Grundlage von in einer ersten Position des Flurförderzeugs erfassten Signalechos erzeugt und mit einem ersten Template verglichen, wobei eine zweite Darstellung des Objekts auf Grundlage von in einer zweiten Position des Flurförderzeugs erfassten Signalechos erzeugt mit einem zweiten Template verglichen wird. Das Objekt gilt dann als erkannt, wenn sowohl zwischen der ersten Darstellung und dem ersten Template als auch zwischen der zweiten Darstellung und dem zweiten Template eine hinreichende Übereinstimmung besteht. Gemäß dieser Ausgestaltung kann also insbesondere eine Bildfolge mit zwei oder mehreren Darstellungen des Objekts erzeugt und mit entsprechenden Templates verglichen werden. Daraus lässt sich mit höherer Zuverlässigkeit schlussfolgern, ob die Signalechos durch ein teiltransparentes Objekt oder durch ein nicht transparentes Objekt bedingt sind. Auch können so eventuell auftretende Mehrwegereflexionen unberücksichtigt bleiben, welche andernfalls zu einer fehlerhaften Objekterkennung führen können. So kann es auch bei Mehrwegereflexionen zu mehreren Signalechos unter demselben Raumwinkel kommen. Bei einer Bewegung des Flurförderzeugs treten diese Mehrwegereflexionen jedoch üblicherweise nicht mehr oder zumindest nicht mehr unter demselben Raumwinkel auf. Ein teiltransparentes zweites Objekt mit dahinterliegendem, nicht transparentem erstem Objekt wird hingegen weiterhin zum Eintreffen zumindest zweier Signalechos unter demselben Raumwinkel führen. Auch lässt sich durch Berücksichtigung der Eigenbewegung des Flurförderzeugs identifizieren, ob es sich bei einem vermeintlichen Signalecho möglicherweise nur um ein Rauschen handelt. Auch kann beispielsweise ein relativ schwaches Signalecho mit dieser Ausgestaltung plausibilisiert werden und sich damit vom Rauschen abheben. Bewegt sich der aus dem Signalecho resultierende Bildpunkt in Einklang zu der Eigenbewegung des Flurförderzeugs, wird es sich wahrscheinlich um ein erkennungswürdiges Objekt und nicht um Rauschen handeln.

Auf Grundlage des erkannten Objekts kann das Flurförderzeug gesteuert werden, wie bereits angesprochen. So kann nach einer Ausgestaltung das Flurförderzeug automatisch auf Grundlage des erkannten Objekts ausgerichtet werden. Wie bereits angesprochen, kann das Flurförderzeug beispielsweise automatisch mit der Lastgabel in Palettentaschen der Palette einfahren, auch wenn diese durch eine teiltransparente Folie verdeckt sind. Ebenso könnte das Flurförderzeug einen teiltransparenten Segmentvorhang automatisch durchfahren. Auch eine teilautomatische Steuerung ist denkbar. So kann nach einer Ausgestaltung eine durch eine Bedienperson des Flurförderzeugs zu vollführende oder zu initiierende Ausrichtung oder Bewegung des Flurförderzeugs auf Grundlage des erkannten Objekts der Bedienperson optisch und/oder akustisch angezeigt werden. Das Flurförderzeug kann entsprechende Anzeigevorrichtungen umfassen. Beispielsweise könnte der Bedienperson auf einem Display angezeigt werden, wie die Lastgabel auszurichten ist, um eine Palettenaufnahme zu ermöglichen. Bei korrekter Ausrichtung könnte eine akustische Rückmeldung erfolgen. In einem teilautomatisierten Fall könnte optisch oder akustisch angezeigt werden, dass eine Palette erkannt wurde und dass das Flurförderzeug zur entsprechenden Ausrichtung bereit ist. Durch eine Interaktion der Bedienperson mit dem Flurförderzeug, beispielsweise durch Gedrückthalten eines entsprechenden Bedienelements, könnte dann eine automatische Ausrichtung des Flurförderzeugs erfolgen.

Nach einer Ausgestaltung werden zum Erkennen des Objekts Umgebungselemente berücksichtigt. Es könnte so aus der Umgebung, in der das Objekt üblicherweise zu erwarten ist, darauf geschlossen werden, ob es sich bei den bekannten Signalechos tatsächlich um das Objekt handelt. So kann beispielsweise die Wand hinter einem Lagerplatz ein Hinweis darauf sein, dass erfasste Signalechos tatsächlich von einer auf dem Lagerplatz befindlichen Palette stammen. Auch kann die Wand einen Hinweis darauf geben, wo mit hoher Wahrscheinlichkeit ein entsprechendes Signalecho zu finden ist.

Die Erfindung wird im Folgenden anhand von Figuren erläutert. Es zeigen:
- Figur 1: ein findungsgemäßes Flurförderzeug in einer schematischen Darstellung von oben und von der Seite,
- Figur 2: eine schematische Erkennung einer Palette durch Template-Matching,
- Figur 3: das fehlgeschlagene Erkennen der Palette aufgrund durch teiltransparente Folie verdeckter Palettentaschen,
- Fign. 4, 5: eine Palettenerkennung gemäß der Erfindung,
- Figur 6: eine schematische Darstellung der Entstehung von Signalechos,
- Figur 7: die Freiraumerkennung in einem Lagerregal, und
- Figur 8: das Durchfahren eines teiltransparenten Segmentvorgangs durch ein Flurförderzeug.

Soweit nichts anderes angegeben ist, bezeichnen im Folgenden gleiche Bezugszeichen gleiche Gegenstände.

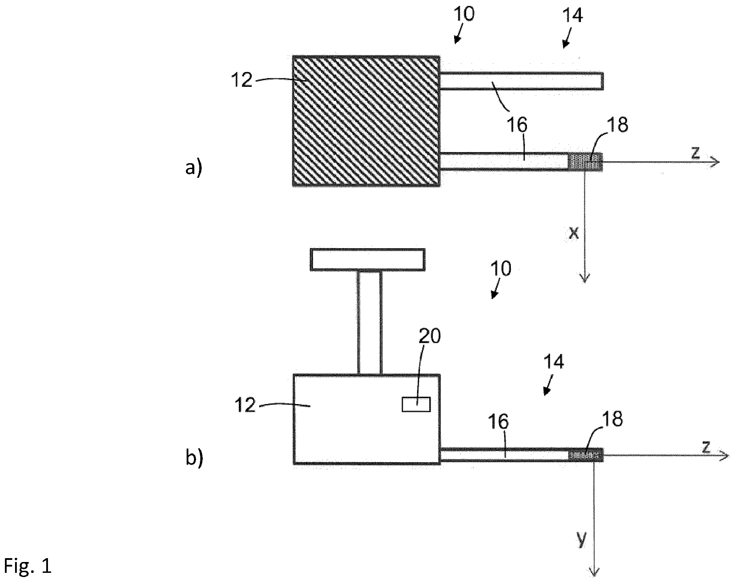

Figur 1 zeigt ein erfindungsgemäßes Flurförderzeug 10, wobei das Flurförderzeug 10 in Figur 1a in einer Ansicht von oben und in Figur 1b in einer Ansicht von der Seite dargestellt ist. Das Flurförderzeug 10 umfasst ein Antriebsteil 12 und ein Lastteil 14. Das Lastteil 14 weist eine Lastgabel auf mit zwei Gabelzinken 16. In der Spitze einer der Gabelzinken 16 ist eine Sensoreinheit 18 als Sende- und Empfangseinrichtung angeordnet, die Erkennungssignale aussendet und von Objekten in der Umgebung des Flurförderzeugs 10 reflektierte Erkennungssignale als Signalechos erfasst. Die Sensoreinheit 18 kann beispielsweise ein 2D- oder 3D-LIDAR aufweisen. Die Sensoreinheit kann auch an anderer Stelle angeordnet sein, beispielsweise an einem Mast des Flurförderzeugs.

Auf Grundlage der durch die Sensoreinheit 18 empfangenen Signalechos erzeugt eine im Antriebsteil 12 des Flurförderzeugs 10 angeordnete Auswerteeinrichtung 20 Darstellungen von in der Umgebung des Flurförderzeugs befindlichen Objekten. Diese Darstellungen vergleicht die Auswerteeinrichtung 20 mit hinterlegten Templates, wobei bei hinreichender Übereinstimmung zwischen der jeweiligen Darstellung und dem jeweiligen Template das dem Template zugrunde liegende Objekt als erkannt gilt. Ein solches Template-Matching ist im Detail in EP 3 316 181 A1 beschrieben.

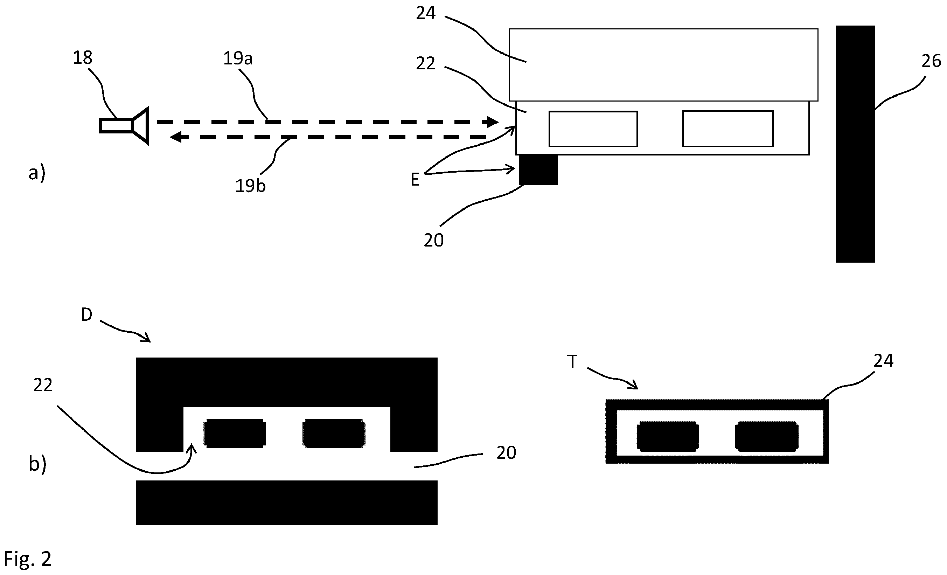

In Figur 2a ist ersichtlich, dass die Sensoreinheit 18 Erkennungssignale 19a aussendet und ein reflektiertes Erkennungssignal 19b als Signalecho empfängt. Bei der in Figur 2a ersichtlichen Darstellung ist die Lastgabel des Flurförderzeugs auf die Höhe einer auf einem Regalträger 20 lagernden Palette 22 angehoben. Die Palette 22 weist eine Ladung 24 auf. Zudem ist eine Regalrückwand 26 ersichtlich. Die Sensoreinheit 18 sendet eine Vielzahl von Erkennungssignalen 19a unter unterschiedlichen Raumwinkeln aus, wobei Reflexionen an der Palette 22 sowie am Regalträger 20 auftreten. So entstehen Signalechos bei Bezugszeichen E und es ergibt sich die in Figur 2b ersichtliche Darstellung. Diese Darstellung zeigt in weiß das aus den Signalechos E erzeugte Regalfrontbild mitsamt einer Front der Palette 22 sowie einer Front des Regalträgers 20. In schwarz dargestellt sind umgebende Bereiche, zu denen entweder keine Signalechos empfangen wurden oder deren Signalechos nicht dargestellt sind. So könnte insbesondere die Ladung 24 in der Darstellung D ebenfalls ersichtlich sein, ist jedoch nicht gezeigt. Gut erkennbar sind in der Darstellung D die zwei rechteckförmigen Palettentaschen der Palette 22. Auch die hinter der Palette befindliche Regalrückwand 26 erzeugt grundsätzlich ein Signalecho. Dieses wurde jedoch für die Objekterkennung nicht berücksichtigt. Dies kann beispielsweise erreicht werden, indem für die Erkennung des Objekts nur Signalechos verwendet werden, die innerhalb eines vorgegebenen Zeitraums nach Aussenden des Erkennungssignals bei der Sensoreinheit 18 eintreffen. Die in Figur 2b ersichtliche Darstellung D wird mit dem in Figur 2b rechts ersichtlichen Template T verglichen. Das Template T ist als Musterbild einer Palettenfront in der Auswerteeinrichtung 20 hinterlegt. Bei hinreichender Übereinstimmung zwischen der Darstellung D und dem Template T erkennt die Auswerteeinrichtung 20 die Palette 22 als eine solche. In dem vorliegenden Beispiel ist der Blick auf die Front der Palette 22 frei, sodass Darstellung D und Template T gut übereinstimmen und die Palette erkannt werden kann. Es kann jedoch vorkommen, dass der Blick auf die Front der Palette beispielsweise durch eine teiltransparente Folie verdeckt ist, welche regelmäßig zur Fixierung von auf der Palette angeordneten Lasten verwendet wird.

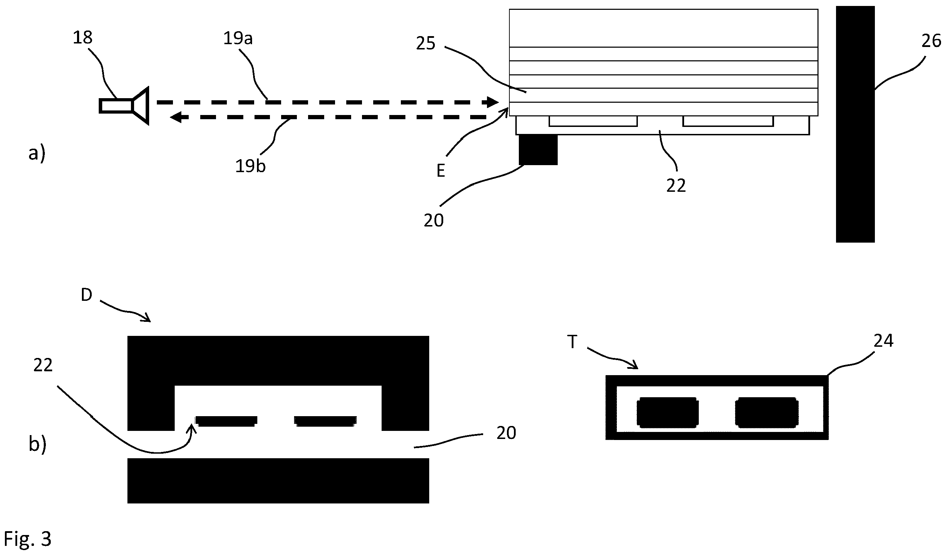

Dies ist in Figur 3a dargestellt. Hier ist die Ware 24 mit einer teiltransparenten Folie 25 umwickelt. Wie ersichtlich, ragt die Folie 25 nach unten über die Ware hinaus und umgibt auch die Palette 22 derart, dass die Palettentaschen teilweise abgedeckt sind. Von der Sensoreinheit 18 ausgesandte Erkennungssignale 19a werden dabei an der Folie 25 reflektiert, sodass sich durch bekannte Erkennungsverfahren das in Figur 3b ersichtliche Bild ergibt. Diese Darstellung der Palette 22 weicht von dem in Figur 3b rechts erneut dargestellten Template T so stark ab, dass die Palette 22 nicht als solche erkannt wird. Hier setzt die Erfindung an.

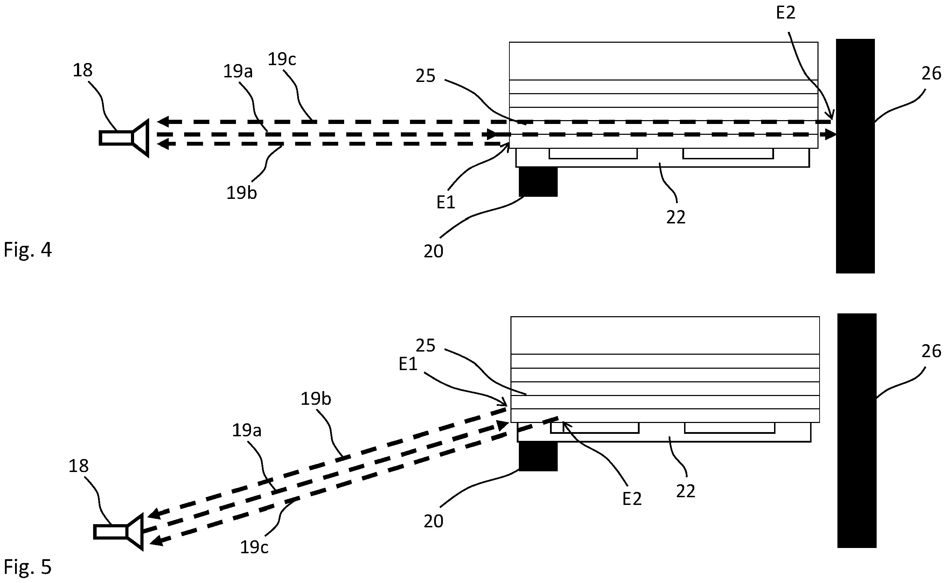

Wie die Erfinder erkannt haben, kommt es aufgrund der Teiltransparenz der Folie 25 zu mehrfachen Signalechos unter demselben Raumwinkel. Wie in Figur 4 dargestellt, wird nur ein erster Teil der Erkennungssignale 19a an der Folie 25 als Signal 19b reflektiert, während ein zweiter Teil der Erkennungssignale 19a durch die Folie hindurchtritt, die dahinterliegenden Palettentaschen passiert und an der Regalrückwand 26 als Signal 19c reflektiert wird. Es ergeben sich somit erste Signalechos E1 an der Palettenfront und der dort befindlichen Folie 25 sowie zweite Signalechos E2 an der Regalrückwand 26. Damit kommen in der Sensoreinheit 18 unter demselben Raumwinkel mehrere Signalechos an, nämlich zumindest die Signalechos E1 und E2. Grundsätzlich können noch weitere Signalechos erkannt werden, beispielsweise durch eine Reflexion des Erkennungssignals an der an der Rückseite der Palette 22 befindlichen Folie 25. Erfindungsgemäß ist vorgesehen, dass für die Raumwinkel, denen mehrere Signalechos zugeordnet wurden, nur die zuletzt in der Sensoreinheit 18 eingetroffenen Signalechos für die Erkennung des Objekts ausgewertet werden. So wird in dem vorliegenden Beispiel lediglich das Signalecho E2 der Objekterkennung zugrunde gelegt, das Signalecho E1 jedoch nicht. Somit kann gewissermaßen durch die teiltransparente Folie 25 hindurchgeschaut werden. Trotz der Verdeckung der Palettentaschen durch die Folie 25 ergibt sich damit ein wie in Figur 2b links dargestelltes, vollständiges Frontbild der Palette 22. Damit kann das Template-Matching mit dem Template T erfolgreich durchgeführt und das Objekt als Palette erkannt werden.

In Figur 5 ist die Sensoreinheit 18 noch auf einer geringeren Höhe angeordnet als die Palette 22. Auch hier kann jedoch bereits die Palette 22 erfolgreich erkannt werden. Bei dieser Anordnung ergibt sich das zweite Echo E2 durch eine Reflexion des Erkennungssignals an einer Unterseite der Palettenoberplatte. Auch hier kann sich entsprechend wieder die Darstellung D aus Figur 2b links ergeben. Es kommt somit bei erfindungsgemäßer Auswertung des zweiten Echos E2 wiederum zur erfolgreichen Erkennung der Palette, da hinreichende Übereinstimmung der Darstellung mit dem Template besteht.

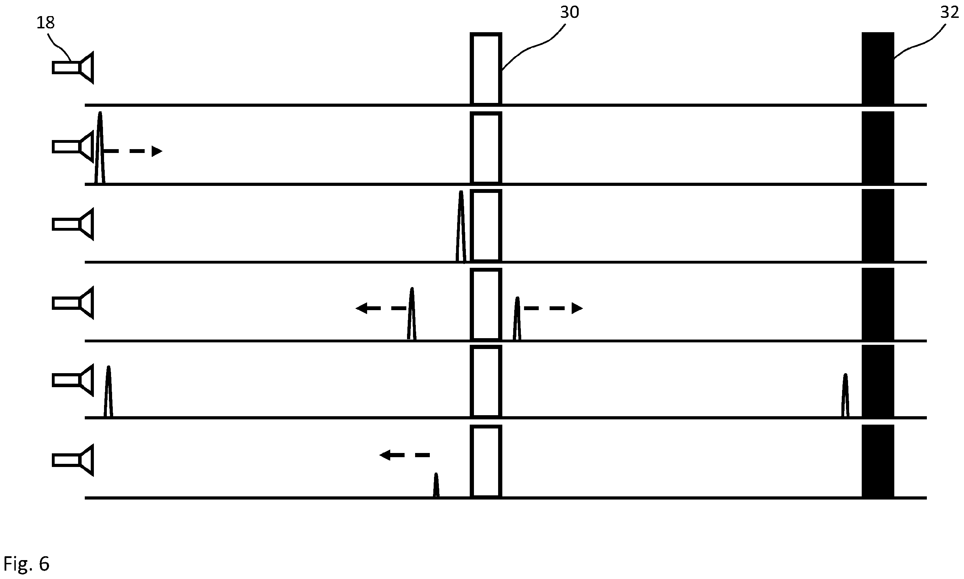

Figur 6 zeigt schematisch den Signalgang. Zu erkennen sind von der Sensoreinheit 18 ausgesendete und empfangene Signalpeaks. Ein Signalpeak wird als Erkennungssignal von der Sensoreinheit 18 ausgesendet, trifft auf ein transparentes Objekt 30, sodass das Signal zum Teil reflektiert wird und zum Teil transmittiert. Der reflektierte Teil gelangt als erstes zurück zur Sensoreinheit 18 und wird als erstes Signalecho registriert. Der transmittierte Teil wird an einem nicht transparenten Objekt 32 vollständig reflektiert, durchtritt wiederum teilweise das transparente Objekt 30 und gelangt anschließend wieder zur Sensoreinheit 18, wo es als zweites Signalecho registriert wird.

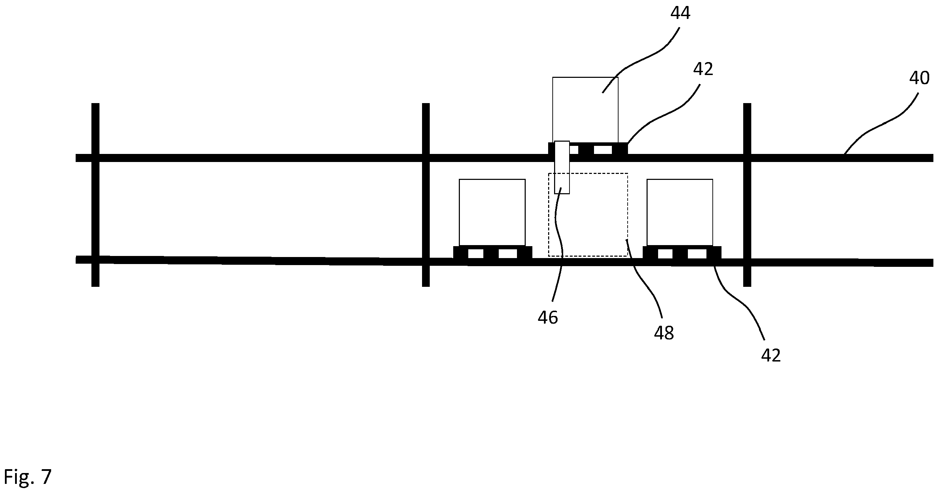

In Figur 7 ist ein weiterer Anwendungsfall für das erfindungsgemäße Verfahren gezeigt. Es ist eine Frontalansicht eines Regals 40 mit darin befindlichen Ladungsträgern 42, ebenfalls ausgebildet als Paletten, ersichtlich. Die auf der oberen Regalebene angeordnete Palette 42 trägt eine Ladung mit Folierung 44, wobei ein Teil 46 der Folierung 44 nach unten in die darunterliegende Regalebene ragt. Dieser Folienteil 46 stört damit die Erkennung eines Freiraums 48 durch das Flurförderzeug 10. So wird, bei bekannten Verfahren, der herunterhängende Teil 46 der Folie 44 als Hindernis erkannt und damit der Palettenplatz nicht als frei erkannt. Dank des erfindungsgemäßen Verfahrens kann jedoch in der oben erläuterten Weise durch Auswertung des zuletzt eintreffenden Signalechos durch den herunterhängenden Teil 46 der Folie 44 hindurchgeblickt werden und somit der Freiraum 48 als ein solcher erkannt werden. Es kann dann ein Ladungsträger in diesem Freiraum abgeladen werden, ohne auf den herunterhängenden Teil 46 Rücksicht zu nehmen.

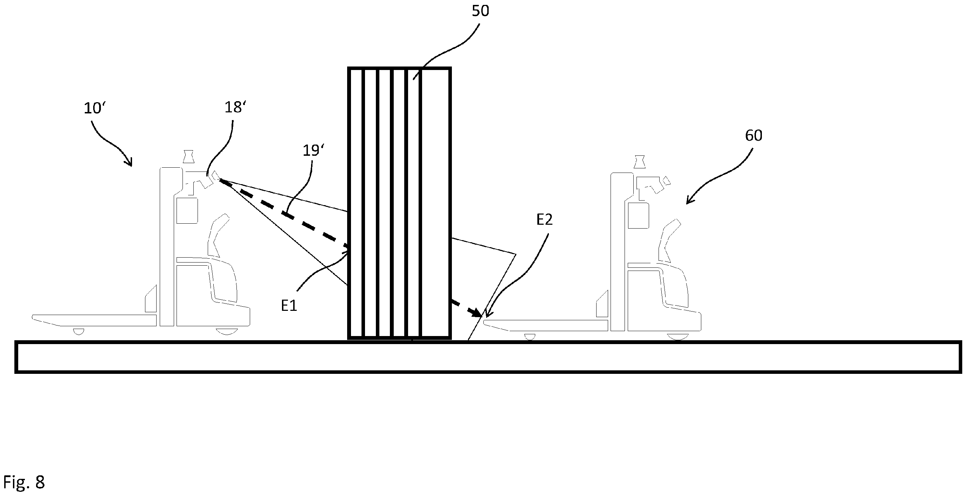

Figur 8 zeigt ein Flurförderzeug 10' bei der Durchfahrt durch einen teiltransparenten Segmentvorhang 50. Das Flurförderzeug 10' weist eine Sensoreinheit 18' auf, die in Fahrtrichtung des Flurförderzeugs 10' auf einen vor dem Flurförderzeug befindlichen Boden blickt. Von der Sensoreinheit 18' ausgesendete Erkennungssignale 19' erzeugt hierbei ein erstes Echo E1 an dem teiltransparenten Segmentvorhang 50 sowie ein weiteres Echo E2 an einem hinter dem Segmentvorhang 50 befindlichen zweiten Flurförderzeug 60. Durch Auswertung des zweiten Echos E2 kann das Flurförderzeug 10' somit durch den Segmentvorhang 50 hindurchblicken und das dahinterliegende Flurförderzeug 60 erkennen. Es wird zudem erkannt, dass der Segmentvorhang 50 selbst kein Hindernis bildet, sodass das Flurförderzeug 10' diesen passieren kann. Sollte sich kein zweites Flurförderzeug hinter dem Segmentvorhang befinden, könnte beispielsweise der hinter dem Segmentvorhang befindliche Bodenbereich als Objekt erkannt werden.

### Bezugszeichenliste

- 10: Flurförderzeug
- 10': Flurförderzeug
- 12: Antriebsteil
- 14: Lastteil
- 16: Gabelzinken
- 18: Sensoreinheit
- 18': Sensoreinheit
- 19a: Erkennungssignal
- 19b: reflektiertes Erkennungssignal
- 19c: reflektiertes Erkennungssignal
- 19': Erkennungssignal
- 20: Regalträger
- 22: Palette
- 24: Ladung
- 25: teiltransparente Folie
- 26: Regalrückwand
- 30: transparentes Objekt
- 32: nicht-transparentes Objekt
- 40: Regal
- 42: Ladungsträger
- 44: Folierung
- 46: Teil der Folierung
- 48: Freiraum
- 50: teiltransparenter Segmentvorhang
- 60: zweites Flurförderzeug

- D: Darstellung
- T: Template
- E1: erstes Signalecho
- E2: zweites Signalecho

## Patentansprüche

1. Verfahren zum Erkennen von Objekten in einem Lager mittels eines Flurförderzeugs (10), mit den Schritten
- Aussenden eines Erkennungssignals (19a) mittels einer Sendeeinrichtung (18) des Flurförderzeugs (10),
- Erfassen des von Objekten (22) in der Umgebung reflektierten Erkennungssignals (19b, 19c) als Signalecho (E1, E2) mittels einer Empfangseinrichtung (18) des Flurförderzeugs (10),
- Zuordnen eines Raumwinkels und eines Empfangszeitpunkts zu jedem der Signalechos (E1, E2),
- Prüfen, ob mehreren der Signalechos (E1, E2) derselbe Raumwinkel zugeordnet wurde,
- wenn einem Raumwinkel mehrere Signalechos (E1, E2) zugeordnet wurden, Auswerten des gemäß Empfangszeitpunkt für diesen Raumwinkel zuletzt in der Empfangseinrichtung (18) eingetroffenen Signalechos (E1, E2) für die Erkennung des Objekts (22),
- Erkennen des Objekts (22) auf Grundlage der Signalechos (E1, E2).

2. Verfahren nach Anspruch 1, **dadurch gekennzeichnet, dass** für die Erkennung des Objekts (22) nur Signalechos (E1, E2) ausgewertet werden, die innerhalb eines vorgegebenen Zeitraums nach Aussenden des Erkennungssignals (19) bei der Empfangseinrichtung (18) eintreffen.

3. Verfahren nach Anspruch 2, **dadurch gekennzeichnet, dass** der vorgegebene Zeitraum auf einer maximal zu erwartenden Messdistanz basiert.

4. Verfahren nach einem der vorhergehenden Ansprüche, **gekennzeichnet durch** Erkennen des Objekts (22) durch Erzeugen einer Darstellung (D) des Objekts (22) auf Grundlage der Signalechos (E1, E2) und Vergleich der Darstellung (D) mit einem Template (T), wobei bei hinreichender Übereinstimmung zwischen der Darstellung (D) und dem Template (T) das Objekt (22) als erkannt gilt.

5. Verfahren nach Anspruch 4, **gekennzeichnet durch** Erzeugen der Darstellung (D) des Objekts (22) durch Erstellen eines zweidimensionalen Datensatzes durch Projizieren von Bildpunkten auf eine Projektionsebene.

6. Verfahren nach Anspruch 5, **gekennzeichnet durch** Erstellen eines weiteren Datensatzes, der ein Tiefenprofil entlang einer Linie an der Position der Projektionsebene umfasst, Vergleichen des weiteren Datensatzes mit einem dem Objekt zugeordneten, vordefinierten Tiefenprofilmuster und endgültiges Erkennen des Objekts, wenn beim Vergleichen eine hinreichende Übereinstimmung festgestellt wird.

7. Verfahren nach einem der vorhergehenden Ansprüche, **gekennzeichnet durch** Zuordnen eines, im Falle mehrerer Signalechos pro Raumwinkel, vor dem zuletzt in der Empfangseinrichtung (18) eingetroffenen Signalecho (E2) in der Empfangseinrichtung (18) eingetroffenen Signalechos (E1) zu einem zweiten Objekt und Erkennen des zweiten Objekts als teiltransparentes Objekt (25, 44, 50).

8. Verfahren nach Anspruch 7, **gekennzeichnet durch** Erkennen des zweiten Objekts als Folie (25, 44) oder als Segmentvorhang (50).

9. Verfahren nach Anspruch 8, **gekennzeichnet durch** Anpassen der Geschwindigkeit des Flurförderzeugs (10), wenn das zweite Objekt als Folie (44) oder als Segmentvorhang (50) erkannt wurde.

10. Verfahren nach einem der vorhergehenden Ansprüche, **gekennzeichnet durch** Berücksichtigen der Eigenbewegung des Flurförderzeugs (10) für die Erkennung des Objekts.

11. Verfahren nach einem der vorhergehenden Ansprüche, **gekennzeichnet durch** Erzeugen einer ersten Darstellung des Objekts auf Grundlage von in einer ersten Position des Flurförderzeugs (10) erfassten Signalechos, Vergleich der ersten Darstellung mit einem ersten Template, Erzeugen einer zweiten Darstellung des Objekts auf Grundlage von in einer zweiten Position des Flurförderzeugs (10) erfassten Signalechos, Vergleich der zweiten Darstellung mit einem zweiten Template T, Erkennen des Objekts bei hinreichender Übereinstimmung zwischen der ersten Darstellung D und dem ersten Template T sowie zwischen zweiter Darstellung und zweitem Template.

12. Verfahren nach einem der vorhergehenden Ansprüche, **gekennzeichnet durch** Steuerung des Flurförderzeugs (10) durch automatisches Ausrichten oder Bewegen des Flurförderzeugs (10) auf Grundlage des erkannten Objekts.

13. Verfahren nach einem der vorhergehenden Ansprüche, **gekennzeichnet durch** optische und/oder akustische Anzeige einer durch eine Bedienperson des Flurförderzeugs (10) zu vollführende oder zu initiierende Ausrichtung oder Bewegung des Flurförderzeugs (10) auf Grundlage des erkannten Objekts.

14. Verfahren nach einem der vorhergehenden Ansprüche, **dadurch gekennzeichnet, dass** zum Erkennen des Objekts Umgebungselemente, insbesondere eine hinter einem Lagerplatz befindliche Wand, berücksichtigt werden.

15. Flurförderzeug mit einer Sendeeinrichtung (18) zum Aussenden eines Erkennungssignals, einer Empfangseinrichtung (18) zum Erfassen des von Objekten in der Umgebung reflektierten Erkennungssignals als Signalecho (E1, E2), sowie einer Auswerteeinrichtung (20), wobei die Auswerteeinrichtung (20) dazu ausgebildet ist, jedem der Signalechos (E1, E2) einen Raumwinkel und einen Empfangszeitpunkt zuzuordnen, zu prüfen, ob mehreren der Signalechos (E1, E2) derselbe Raumwinkel zugeordnet wurde, wenn einem Raumwinkel mehrere Signalechos (E1, E2) zugeordnet wurden, das gemäß Empfangszeitpunkt für diesen Raumwinkel zuletzt in der Empfangseinrichtung (18) eingetroffene Signalecho für die Erkennung des Objekts auszuwerten, das Objekt auf Grundlage der Signalechos zu erkennen, das Flurförderzeug (10) auf Grundlage des erkannten Objekts zu steuern.
